# FASCICULE DE BREVET EUROPEEN

(11) **EP 3 524 515 B1**
(45) Date de publication et mention de la délivrance du brevet: **31.03.2021**
(21) Numéro de dépôt: 19156520.9
(22) Date de dépôt: 11.02.2019
(51) Int. Cl.: B64C 7/00, B64C 9/02, F16J 15/02

(54) **ENSEMBLE POUR AERONEF COMPRENANT UNE SURFACE PORTANTE MOBILE PORTEE PAR UN ARBRE D'ACTIONNEMENT TRAVERSANT UNE FENTE EQUIPEE D'UN JOINT D'ETANCHEITE A EFFICACITE DE SCELLEMENT AMELIOREE**
FLUGZEUGANORDNUNG MIT EINER BEWEGLICHEN TRAGFLÄCHE, DIE VON EINER BETÄTIGUNGSWELLE GETRAGEN WIRD, DIE DURCH EINEN MIT EINER DICHTUNG MIT VERBESSERTER DICHTUNGSEFFIZIENZ VERSEHENEN SCHLITZ VERLÄUFT
ASSEMBLY FOR AIRCRAFT COMPRISING A MOBILE LIFT SURFACE SUPPORTED BY A SHAFT ACTUATOR PASSING THROUGH A SLOT PROVIDED WITH A SEALING GASKET WITH IMPROVED SEALING EFFICIENCY

(30) Priorité: 13.02.2018 BE 201805088
(43) Date de publication de la demande: 14.08.2019
(73) Titulaire: Sonaca S.A., 6041 Gosselies (BE)
(72) Inventeur: GONZE, Albert-Paul, 6120 Nalinnes (BE); RAVIER, Laurent, 59570 Taisnieres-sur-Hon (FR)
(74) Mandataire: Brevalex

(56) Documents cités:
- EP-A1- 2 942 550
- US-A- 3 480 237
- US-A- 4 979 702
- US-A1- 2017 327 204

## Description

### DOMAINE TECHNIQUE

La présente invention se rapporte au domaine de la jonction entre une paroi d'aéronef et une surface portante mobile, et plus spécifiquement à une paroi de fuselage et un volet mobile de bord de fuite également dénommé « *Flap* ».

L'invention concerne tous les types de volets mobiles de bord de fuite, par exemple les volets dits « *single slot* », *« double slots* », *« fixed vane »,* etc.

Il est noté que l'invention s'applique à tous les types d'aéronef, comme une aile volante, un avion à moteur en queue de fuselage, un avion subsonique, un avion supersonique, etc.

### ÉTAT DE LA TECHNIQUE ANTÉRIEURE

Sur les ailes d'aéronef, le volet mobile de bord de fuite situé le plus vers l'intérieur, c'est-à-dire de manière adjacente au fuselage, est pourvu d'un arbre d'actionnement qui traverse une fente de ce même fuselage. Cet arbre d'actionnement est en effet commandé depuis l'intérieur du fuselage, par des moyens d'entraînement conventionnels.

La traversée de la fente du fuselage par l'arbre d'actionnement engendre une problématique aérodynamique, puisque l'air extérieur est susceptible d'être perturbé par la présence de cette fente. Pour limiter les perturbations du flux d'air, il est connu d'implanter un système de joint d'étanchéité dans la fente de fuselage. Plus précisément, il est prévu deux parties de joint distinctes entre lesquelles l'arbre d'actionnement se déplace, lors d'un déplacement du volet mobile entre sa position rentrée et sa position déployée.

Il s'agit généralement d'un joint agissant uniformément sur toute sa longueur au passage de l'arbre d'actionnement en comprenant deux lèvres en regard l'une de l'autre et se déformant dans un mouvement d'ensemble.

En pratique, l'une des difficultés associées à cette solution réside dans la détermination de la rigidité des lèvres du système de joint d'étanchéité. En effet, une rigidité élevée entraîne une déformation importante des lèvres due au passage de l'arbre, cette déformation se propageant sur une longueur conséquente de ces lèvres. Il en découle la présence d'une ouverture parasite de section importante de chaque côté de l'arbre, ce qui provoque des perturbations aérodynamiques conséquentes au niveau de la fente de fuselage. A l'inverse, une rigidité faible des lèvres d'étanchéité réduit la déformation de celles-ci au passage de l'arbre, mais est propice à l'apparition d'une déformation non contrôlée.

Il est connu notamment des documents US2017/327204A1, EP2942550A1, US4979702A et US3480237 des solutions diverses de joint.

Le but de l'invention est de proposer une structure de joint améliorant l'efficacité de scellement d'une fente traversée par un arbre d'actionnement.

### EXPOSÉ DE L'INVENTION

A cet effet, l'invention a pour objet un ensemble pour aéronef comprenant :
- une paroi délimitant un intérieur d'un extérieur de l'aéronef, telle qu'une partie de fuselage ou de voilure, cette paroi comportant une fente de cheminement formée traversante et s'étendant le long d'une direction de longueur de fente depuis une extrémité avant de fente jusqu'à une extrémité arrière de fente ;
- un arbre d'actionnement qui porte une surface portante, cet arbre traversant la fente en étant mobile le long de la direction de longueur de fente entre les extrémités avant et arrière de fente ;
- un socle inférieur et un socle supérieur solidaires de la paroi et agencés de part et d'autre de la fente suivant une direction de largeur de fente qui est normale à la direction de longueur de fente ;
- un joint d'étanchéité pour sceller la fente, comportant une partie inférieure de joint et une partie supérieure de joint agencées en vis-à-vis de part et d'autre de la fente en étant portées respectivement par le socle inférieur et le socle supérieur, ces parties inférieure et supérieure de joint comportant respectivement une lèvre inférieure et une lèvre supérieure flexibles et écrasables dans la direction de la largeur, ces lèvres inférieure et supérieure formant pistes de contact entre lesquelles l'arbre d'actionnement est enserré et se déplace en les déformant durant une mise en mouvement de la surface portante ;
où la partie inférieure de joint comporte une armature inférieure portant la lèvre inférieure et la partie supérieure de joint comporte une armature supérieure portant la lèvre supérieure, caractérisé en ce que chacune des lèvres inférieure et supérieure présentant une forme en oreilles de lapin, avec l'une parmi la lèvre inférieure ou supérieure comprenant deux excroissances indépendantes, et l'autre parmi la lèvre inférieure et supérieure comprenant deux excroissances liée entre elles par une bulle flexible et écrasable qui est destinée à se loger entre les deux excroissances indépendantes.

Avec cette solution, la déformation des parties inférieure et supérieure de joint est limitée à une zone locale, en octroyant un effet d'enroulement autour de l'arbre.

L'invention concerne également un procédé ainsi défini, dans lequel les lèvres inférieure et supérieure comporte chacune une base rigide à partir de laquelle dépasse les excroissances.

L'invention concerne également un procédé ainsi défini, dans lequel :
- l'armature inférieure est portée par des pieds inférieurs espacés les uns des autres suivant la direction de longueur de fente et s'appuyant sur le socle inférieur ;
- l'armature supérieure est portée par des pieds supérieurs espacés les uns des autres suivant la direction de longueur de fente et s'appuyant sur le socle supérieur ;
- ces pieds inférieurs et supérieurs étant prévus pour presser les lèvres inférieure et supérieure l'une contre l'autre tout en étant compressibles selon la direction de largueur de fente.

L'invention concerne également un procédé ainsi défini, dans lequel les pieds inférieurs et supérieurs sont formés d'une succession de portions élastiques en accordéon dans la direction de largeur de fente.

L'invention concerne également un procédé ainsi défini, dans lequel :
- l'armature inférieure est formée d'une alternance de cellules rigides inférieures et de portions souples inférieures ;
- l'armature supérieure est formée d'une alternance de cellules rigides supérieures et de portions souples supérieures.

L'invention concerne également un procédé ainsi défini, dans lequel :
- les cellules rigides inférieures sont agencées chacune dans le prolongement d'un pied inférieur dans la direction de largeur de fente ;
- les cellules rigides supérieures sont agencées chacune dans le prolongement d'un pied supérieur dans la direction de largeur de fente.

L'invention concerne également un procédé ainsi défini, dans lequel la direction de la longueur de fente est circulaire, avec la partie inférieure de joint présentant une forme convexe vu de la fente, et complémentairement la partie supérieure de joint présentant une forme concave vu de la fente, les socles inférieur et supérieur s'étendant perpendiculairement à la paroi de fuselage 5a et l'intersectant chacun pour former chacun une ligne correspondante à un offset, suivant la direction de la largeur de fente, de la direction de la longueur de fente.

L'invention concerne également un procédé ainsi défini, dans lequel les excroissances liées par la bulle sont portées par la lèvre supérieure.

L'invention concerne également un procédé ainsi défini, dans lequel le socle inférieur est prolongé par des parois latérales inférieures qui entourent au moins en partie la partie inférieure de joint, et/ou le socle supérieur est prolongé par des parois latérales supérieures qui entourent au moins en partie la partie supérieure de joint, ces parois latérales inférieures et supérieures formant surfaces de butée des parties inférieure et supérieure de joint en s'étendant suivant la direction de la largeur de fente.

L'invention concerne également un procédé ainsi défini, dans lequel la surface portante est un volet mobile de bord de fuite.

### BRÈVE DESCRIPTION DES DESSINS

- La figure 1 représente une vue en perspective d'un aéronef ;
- La figure 2 représente une vue schématique et partielle en coupe d'une aile d'aéronef selon la présente invention, munie d'un volet mobile de bord de fuite ;
- La figure 2a représente une vue en perspective d'un ensemble pour aéronef selon l'invention, comprenant une partie de fuselage ainsi qu'un volet mobile de bord de fuite adjacent à cette partie de fuselage ;
- La figure 2b est une vue schématique de côté de l'ensemble montré sur la figure précédente ;
- La figure 3 est une vue en perspective d'un joint équipant une fente de cheminement selon l'invention ;
- La figure 4 correspond à une vue en coupe prise le long de la ligne B-B de la figure 3 lorsque le joint est au repos selon l'invention ;
- La figure 5 correspond à une vue en coupe prise le long de la ligne B-B de la figure 3 lorsque le joint est sollicité par l'arbre d'actionnement selon l'invention ;
- La figure 6 correspond à un premier faciès de déformation du joint selon l'invention ;
- La figure 7 correspond à un second faciès de déformation du joint selon l'invention ;

### EXPOSÉ DÉTAILLÉ DE MODES DE RÉALISATION PARTICULIERS

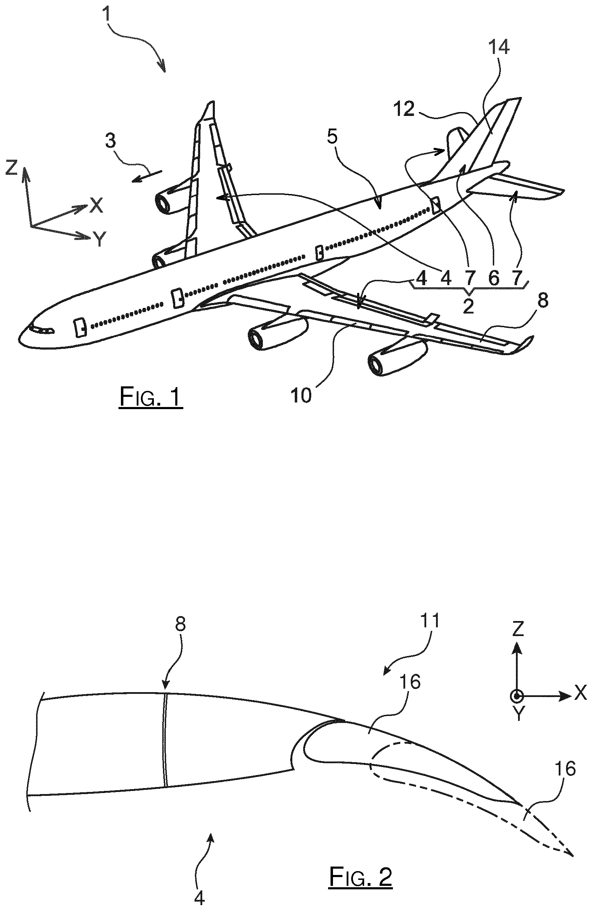

En référence tout d'abord à la figure 1, il est représenté un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

Parmi les éléments de voilure de l'aéronef 1, il est prévu deux ailes principales, dites ailes 4, une dérive verticale 6, ainsi que deux empennages horizontaux 7 situés à l'arrière de cet aéronef. Ces éléments sont fixés au fuselage 5 de l'aéronef.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10. Dans toute la description qui va suivre, par convention, Y correspond à la direction longitudinale de bord d'attaque ou encore direction d'envergure, X correspond la direction orientée transversalement par rapport au bord d'attaque 10, et la direction Z correspond à la direction verticale, ces trois directions étant orthogonales entre elles.

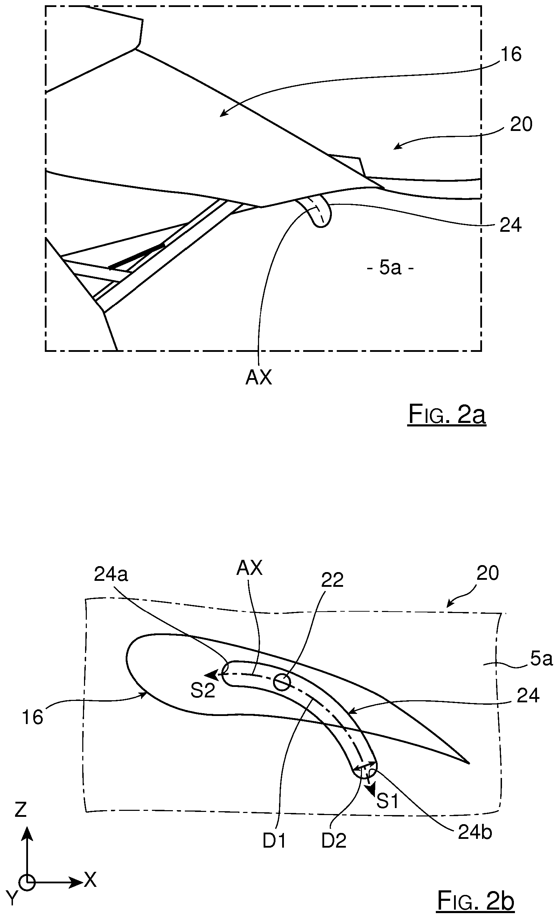

Comme le montre schématiquement la figure 2, c'est le bord de fuite 11 de chacune des deux ailes 4, opposé au bord d'attaque, qui peut être équipé d'au moins un volet mobile de bord de fuite 16, dit « *Flap* ». Il peut s'agir de tout type de volets mobiles de bord de fuite, par exemple les volets dits (de l'anglais) « *single slot* », *« double slots* », « *fixed vane »,* etc.

Chacun de ces volets 16 est destiné à être relié au corps 8 par des moyens conventionnels. Sur cette figure 2, il est montré que le volet mobile de bord de fuite 16 (représenté schématiquement) peut occuper une position rétractée/rentrée dans laquelle il affleure la partie arrière du corps central fixe 8 de l'aile 4. Dans un tel cas, le volet mobile 16 se trouve dans sa position la plus avant. De plus, le volet mobile 16 peut occuper une position entièrement déployée où il est à distance vers l'arrière du corps central fixe 8, cette position entièrement déployée étant adoptée en particulier durant les phases d'atterrissage et de décollage afin d'augmenter la portance à faible ou moyenne vitesse. Ce volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 concernée, bien entendu selon la direction d'envergure de cette aile 4, ou bien uniquement sur une portion de cette aile, comme cela est le plus courant sur les aéronefs.

L'invention concerne plus précisément le volet mobile de bord de fuite 16 qui se trouve le plus vers l'intérieur, à savoir celui qui est adjacent au fuselage 5 délimitant un extérieur EXT d'un intérieur INT de l'aéronef. Une paroi de fuselage 5a et ce volet 16 appartiennent à un ensemble 20 selon l'invention, cet ensemble étant représenté partiellement sur les figures 2a et 2b.

L'extrémité intérieure du volet 16, selon la direction d'envergure Y, est solidaire d'un arbre d'actionnement 22 qui est commandé par des moyens appropriés, logés à l'intérieur du fuselage. Pour ce faire, l'arbre 22 s'étend selon la direction d'envergure Y en traversant une fente de cheminement 24 qui est un volume évidé dans la paroi de fuselage 5a et de ligne médiane AX s'étendant selon une direction de longueur de fente D1 qui est circulaire.

Cette fente 24 qui traverse la paroi de fuselage 5a suit la trajectoire du volet 16 lorsqu'il se déplace de sa position rentrée à sa position déployée. A cet égard, il est noté que l'ensemble 20 est configuré de sorte que lors d'un déplacement du volet 16 de sa position rentrée à sa position déployée, l'arbre 22 se déplace dans la fente 24 selon un premier sens S1 de la direction de longueur de fente D1. Ce premier sens S1 est orienté de manière à aller d'une extrémité avant 24a de la fente de cheminement, correspondant à la position rentrée du volet, vers une extrémité arrière 24b de celle-ci correspondant à la position déployée du volet.

De manière similaire, lors d'un déplacement du volet 16 de la position déployée à la position rentrée, l'arbre 22 se déplace dans la fente dans un second sens S2 opposé au premier sens S1.

L'ensemble 20 selon l'invention comporte également un joint linéaire d'étanchéité 30 au niveau de la fente 24 pour la sceller.

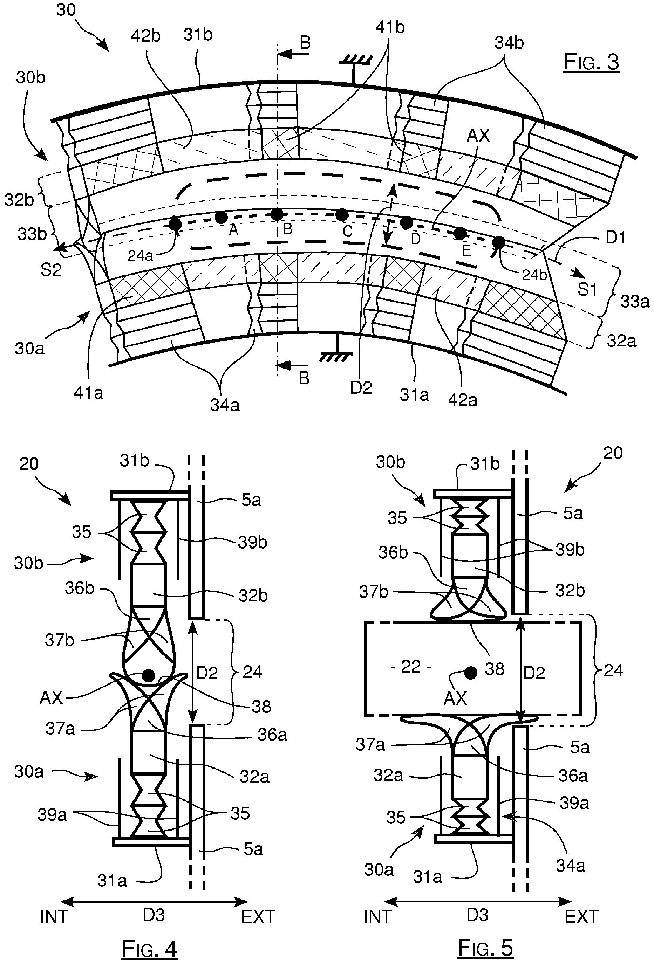

Ce joint 30, illustré indépendamment de l'arbre d'actionnement 22 et équipant la fente 24 à la figure 3, comporte une partie inférieure de joint 30a et une partie supérieure de joint 30b ayant une structure similaire et portées respectivement par un socle inférieur et supérieur 31a et 31b solidaires de la paroi du fuselage 5a. Ces parties inférieure et supérieure de joint 30a et 30b sont agencées de part et d'autre de la fente 24 selon une direction de la largeur de celle-ci, référencée D2 sur les figures. La direction de largeur de fente D2 est localement, en tout point de la fente, sensiblement orthogonale à la direction de longueur de fente D1. Plus précisément, la partie inférieure de joint 30a présente une forme convexe vu de la fente, et complémentairement la partie supérieure de joint présente une forme concave vu de la fente, avec les socles inférieur et supérieur 31a et 31b qui intersectent la paroi de fuselage 5a en formant chacun une ligne correspondante à un offset suivant D2 de la direction D1.

La partie inférieure de joint 30a comporte une armature inférieure 32a formant son corps central, une lèvre inférieure 33a qui prolonge l'armature inférieure 32a vers la fente 24 suivant D2, et une série de pieds inférieurs 34a espacés qui dépassent de l'armature inférieure 32a suivant la direction D2 en s'éloignant de la fente 24 pour prendre appui sur le socle supérieur 31a. De la même manière, la partie supérieure de joint 30b comporte une armature supérieure 32b prolongée vers la fente suivant la direction D2 par une lèvre supérieure 33b, et vers le socle supérieur 31b suivant aussi D2 par des pieds 34b espacés les uns des autres et prenant appui sur ce dernier.

Les parties inférieure et supérieure de joint 30a et 30b sont maintenues par les socles 31a et 31b l'une contre l'autre au niveau des lèvres le long de leur étendue en absence de l'arbre 22 formant une force d'opposition qui déforme le joint 30.

Plus spécifiquement, les pieds inférieurs et supérieurs 34a et 34b, agencés en vis-à-vis deux à deux selon la direction de largeur D2, sont des organes élastiques formés d'une succession de portions en accordéon 35, appelées soufflets, travaillant indépendamment les unes des autres pour presser les deux parties de joints l'une contre l'autre.

La description du joint 30 réalisée ci-dessus a été réalisée lorsqu'il équipe la fente sans l'arbre 22, mais il est entendu qu'en fonctionnement l'arbre est toujours enserré par les deux parties de joint 30a et 30b qui sont alors déformées, en formant des espaces d'ouvertures de part et d'autre de l'arbre. Prévues pour empêcher l'apparition d'une ouverture débouchant à l'extérieur du joint 30 suivant la direction D1, notamment dans le cas le plus critique lorsque l'arbre est au niveau des extrémités avant et arrière de fente 24a et 24b, les parties de joint 30a et 30b s'étendent au-delà de la fente 24 suivant cette direction D1. Dans l'exemple des figures, les parties de joint inférieure et supérieure 30a et 30b comportent chacune une série de quatre pieds 34a et 34b, dont deux formés de part et d'autre de la fente qui sont notamment plus volumineux que ceux formés en vis-à-vis de cette fente à cette fin utile.

L'idée à la base de l'invention est de prévoir le joint 30 le plus souple possible tout en présentant une faible raideur en cisaillement de sorte à limiter les espaces d'ouvertures induits par sa déformation lors du passage de l'arbre 22.

A cet égard, la particularité majeure de l'invention réside dans la morphologie particulière et complémentaire de ces lèvres inférieure et supérieure 33a et 33b prévues pour former des pistes de contact entre lesquelles l'arbre d'actionnement 22 est enserré lors de son passage.

Les lèvres 33a et 33b présentent une structure dite en forme « d'oreilles de lapin » en comprenant respectivement une base rigide 36a et 36b partir de laquelle dépassent des excroissances 37a et 37b flexibles et écrasables. Les excroissances 37a de la lèvre inférieure 33a sont indépendantes l'une de l'autre et prévues pour s'étendre de part est d'autre de la ligne médiane de la fente centrée sur la direction D1. Dans le cas de la lèvre supérieure 33b, les excroissances 37b sont liées entre elles, au niveau de leur extrémité éloignée de la base 36b, par une bulle 38 flexible et écrasable qui est destinée à se loger entre les deux excroissances 37a de la lèvre inférieure, assurant un scellement efficace de la fente 24 lorsque le joint 30 est en situation de repos comme illustré à la figure 4.

Sous l'action de l'arbre 22 comme illustré à la figure 5 selon une même vue que la figure 4, les excroissances inférieure et supérieure 37a et 37b ainsi que la bulle 38 s'écrasent pour intéresser les bases rigides 36a et 36b qui compriment alors les pieds inférieurs et supérieurs 34a et 34b selon la direction D2 pourformer un effet autobloquant. Il est d'ailleurs à noter que l'agencement de portions en accordéon 35 travaillant indépendamment les unes des autres permet de s'affranchir d'un effet de pont induit par la courbure des parties de joint 30a et 30b, susceptible dans le cas contraire d'empêcher la compression du pied et ainsi bloquer la course de l'arbre 22 dans la fente 24.

D'une manière générale, le caractère souple, notamment en cisaillement, des excroissances 37a et 37b, ainsi que de la bulle 38, limite leur déformation à une zone locale autour de l'arbre, autrement dit ces éléments ne descendent pas dans un mouvement d'ensemble. Les oreilles et la bulle retrouvent leur position dite de repos au proche voisinage de l'arbre d'actionnement 22, octroyant la faculté aux lèvres 33a et 33b d'enrouler l'arbre 22 pour limiter l'apparition des espaces d'ouverture parasites. Cet aspect, couplé à l'emboitement des lèvres inférieure et supérieure assure un effet auto-stabilisant dans une direction latérale référencée D3 qui est normale à la paroi de fuselage 5a, autrement dit une bonne tenue aux sollicitations suivant cette direction latérale. En effet, en raison de la déformation locale des parties de joint 30a et 30b, il existe pour un secteur de joint déformé par l'arbre 22, deux secteurs de joint au repos situés de part et d'autre du secteur déformé et dans lequel les lèvres 33a et 33b s'emboitent. Cet emboitement au niveau des secteurs de joint au repos empêche le désalignement des lèvres suivant la direction D3 au niveau du secteur déformé, appelé effet auto-stabilisant.

En outre, il est à noter que dès lors que les excroissances 37a et 37b se mettent à plat au passage de l'arbre 22, la sollicitation de l'arbre sur les parties de joints perd sa composante en cisaillement et devient une flexion pure orientée selon la direction de la largeur D2, amplifiant alors l'effet d'enroulement des lèvres autour de cet arbre.

Il faut souligner que de par sa morphologie, le joint 30 selon l'invention présente une déformation qui est distribuée depuis les lèvres jusqu'aux pieds, autrement dit les sollicitations exercées par l'arbre sont reprisent sur toute son étendue suivant la direction de largeur D2. De part cet aspect, le fonctionnement du joint selon l'invention est optimisé du fait qu'il évite toute déformation trop importante d'une portion spécifique de celui-ci, qui serait alors assujettie à une usure prématurée dans le cas contraire.

Afin d'augmenter la stabilité des parties de joints 30a et 30b dans la direction latérale D3, normale à la paroi de fuselage 5a, les socles inférieur et supérieur 31a et 31b sont prolongés par des parois latérales inférieures et supérieures 39a et 39b qui s'étendent parallèlement à la paroi de fuselage 5a de chaque côté des parties de joint 30a et 30b, comme visible sur les figures 4 et 5. Ces parois latérales inférieures et supérieures 39a et 39b s'étendent à proximité des parties de joint 30a et 30b respectivement pour former des surfaces de butée empêchant les pieds inférieurs et supérieurs 34a et 34b munis de leur portions en accordéon 35 de se déverser latéralement par flambage suivant la direction D3 lors du passage de l'arbre d'actionnement. Cet effet de déversement est d'autant plus important que la dimension des parties de joint suivant la direction de largeur de fente D2 est grande. A cet égard, l'invention prévoit notamment que pour un arbre d'actionnement de 10cm de diamètre, les parties de joint mesurent chacune 25 à 30cm suivant D2.

Les parois latérales inférieures et supérieures 39a et 39b sont des plaques de tôle rapportées sur les socles inférieur et supérieur 31a et 31b, mais il est entendu que l'invention pourrait prévoir des parois latérales formées d'un seul tenant avec les socles. En outre, il est à noter que munir seulement un des deux socles de parois latérales, en particulier seulement le socle inférieur 31a, ne sort pas du cadre de l'invention.

Enfin, attendu que ces parois latérales 39a et 39b ne doivent pas gêner la déformation du joint, leur étendue mesurée depuis le socle qui les porte suivant la direction de largeur D2 est plafonnée en deçà de la valeur pour laquelle elles touchent les excroissances 37a ou 37b de la lèvre qui leur est associée lors de la sollicitation par l'arbre.

Une autre particularité de l'invention réside dans le comportement différent du joint 30 selon sa position relative avec l'arbre d'actionnement 22.

Pour ce faire, l'armature inférieure 32a est formée d'une alternance de cellules rigides inférieures 41a et de cellules souples inférieures 42a pour limiter la raideur en cisaillement, et de la même manière l'armature supérieure 32b est formée d'une alternance de cellules rigides supérieures 41b et de cellules souples supérieures 42b. Les cellules rigides inférieures 41a sont situées chacune dans le prolongement suivant D2 d'un pied inférieur 34a. Selon le même agencement, les cellules rigides supérieures 41b sont situées chacune dans le prolongement suivant D2 d'un pied supérieur 34b. Autrement dit, seules les cellules rigides 41a et 41b sont supportées par un pied, avec chaque cellule souple étant agencé entre deux cellules rigides.

On distingue dès lors des positions A, C ou E relatives de l'arbre 22 pour lesquels le joint 30 présentera un premier faciès de déformation, et des positions B et D pour lequel le joint 30 présente un second faciès de déformation, distinct du premier.

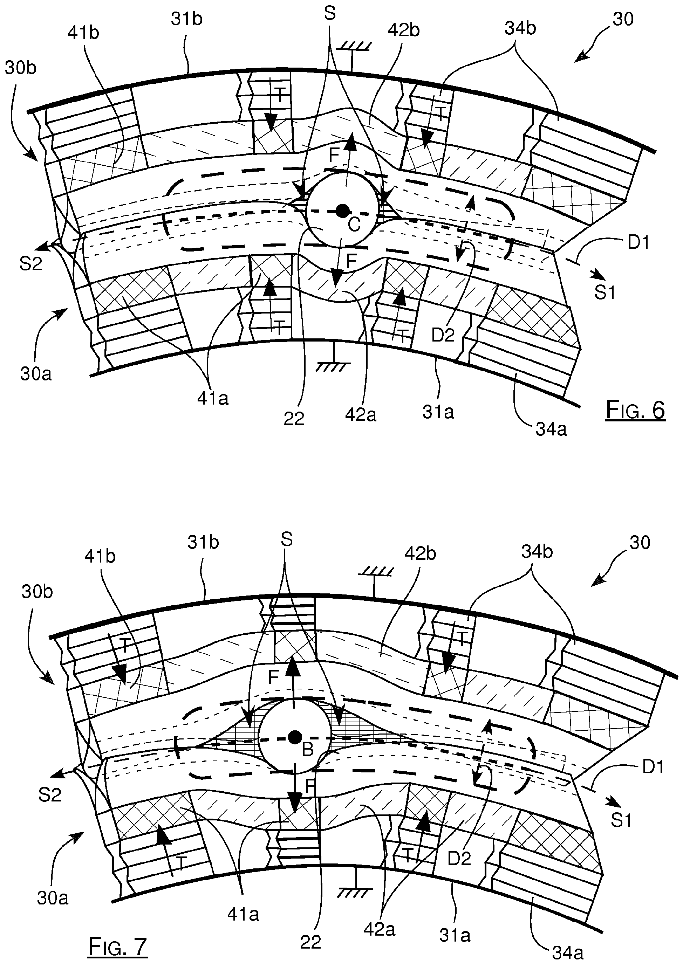

Pour le premier faciès de déformation représenté à la figure 6, ici lorsque l'arbre 22 est situé au niveau de la position C et exerce une force F, les cellules souples 42a et 42b alignées avec l'arbre 22 selon la direction D2 ploient avec les lèvres 33a et 33b de par leur attribut souple, tandis que les pieds 34a et 34b dépassant des cellules rigides 41a et 41b adjacentes repoussent par réaction élastique T les lèvres autour de l'arbre 22. Les espaces d'ouverture repérés par S sont alors très réduits du fait que le joint se déforme ponctuellement en enveloppant au maximum l'arbre d'actionnement 22. Stratégiquement les portions A, C et E correspondent aux positions de verrouillage prédéfinies de l'arbre d'actionnement 22 où le meilleur enroulement est souhaité, avec A la position entièrement rentrée du volet, E la position entièrement déployée du volet, et C la position dite intermédiaire de décollage.

En contrepartie, en ce qui concerne le second faciès de déformation représenté à la figure 7 pour la position B, les pieds 34a et 34b associés aux cellules rigides 41a et 41b sollicitées par la force F se compriment en déformant avec eux les cellules souples 42a et 42b adjacentes, ce qui induit une déformation du joint plus étendue et donc des espaces d'ouverture S plus importants que dans le premier faciès. Attendu que les positions B et D de l'arbre 22 constituent des positions de transition de l'arbre entre les positions A, C et E, autrement au niveau desquelles dit l'arbre n'est censé se situer que très brièvement pour rejoindre une position de verrouillage, les perturbations au niveau de ces zones sont négligeables.

Avec cet arrangement, on comprendra que l'alternance des cellules rigides et souples selon l'invention est prévue pour stratégiquement limiter au maximum les espaces d'ouverture pour les positions d'utilisation effective du volet 16. Cette morphologie spécifique des armatures inférieure et supérieure 32a et 32b permet ainsi d'exacerber pour les positions de verrouillage l'effet d'enroulement octroyé par la forme en « oreilles de lapin » des lèvres.

Dans l'exemple des figures, la lèvre comprenant les excroissances liées par la bulle 38 est stratégiquement portée par la partie supérieure de joint 30a afin de s'affranchir d'un voilement local durant sa déformation en raison de sa courbure concave, mais il est à noter que l'arrangement inverse peut être retenu sans sortir du cadre de l'invention.

En outre, l'invention ne se limite pas une fente de cheminement 24 s'étendant selon une trajectoire circulaire, conditionnant l'orientation des parties inférieure et supérieure de joint 30a et 30b, et permet d'autre trajectoires de mise en mouvement du volet 16, tel qu'une fente rectiligne.

Il est à noter que l'invention pourrait prévoir une architecture différente de pieds 34a et 34b, notamment en l'absence d'effet de pont dans le cas où les parties inférieure et supérieure de joint 30a et 30b s'étendent de façon rectiligne en équipant une fente rectiligne.

Dans l'exemple des figures, le joint 30 est particulièrement performant pour trois positions prédéfinies du volet 16, i.e. la position entièrement rentrée du volet, la position entièrement déployée du volet, et la position dite intermédiaire de décollage. A cet égard, il est à noter que l'invention pourrait prévoir d'augmenter le nombre de cellules souples et rigides des armatures inférieures et supérieurs pour délimiter davantage de positions favorables au besoin.

Concrètement le joint selon l'invention n'est pas limité pour l'actionnement d'un volet, et trouve son application dans le domaine général de l'aviation, en proposant de sceller une fente évidée dans une paroi d'aéronef, comme une paroi de fuselage ou de voilure, délimitant son intérieur INT de son extérieur EXT, cette fente étant traversée par un arbre d'actionnement d'une surface portante située à l'extérieur et à géométrie variable en étant mobile le long de cette fente.

## Revendications

1. Ensemble (20) pour aéronef comprenant :
- une paroi (5a) délimitant un intérieur d'un extérieur de l'aéronef, telle qu'une partie de fuselage ou de voilure, cette paroi comportant une fente de cheminement (24) formée traversante et s'étendant le long d'une direction de longueur de fente (D1) depuis une extrémité avant de fente (24a) jusqu'à une extrémité arrière de fente (24b) ;
- un arbre d'actionnement (22) qui porte une surface portante (16), cet arbre (22) traversant la fente en étant mobile le long de la direction de longueur de fente (D1) entre les extrémités avant et arrière de fente (24a, 24b) ;
- un socle inférieur (31a) et un socle supérieur (31b) solidaires de la paroi (5a) et agencés de part et d'autre de la fente suivant une direction de largeur de fente (D2) qui est normale à la direction de longueur de fente (D1) ;
- un joint d'étanchéité (30) pour sceller la fente (24), comportant une partie inférieure de joint (30a) et une partie supérieure de joint (30b) agencées en vis-à-vis de part et d'autre de la fente (24) en étant portées respectivement par le socle inférieur (31a) et le socle supérieur (31b), ces parties inférieure et supérieure de joint (30a, 30b) comportant respectivement une lèvre inférieure (33a) et une lèvre supérieure (33b) flexibles et écrasables dans la direction de la largeur (D2), ces lèvres inférieure et supérieure formant pistes de contact entre lesquelles l'arbre d'actionnement (22) est enserré et se déplace en les déformant durant une mise en mouvement de la surface portante (16), la partie inférieure de joint (30a) comportant une armature inférieure (32a) qui porte la lèvre inférieure (33a) et la partie supérieure de joint (30b) comportant une armature supérieure (32b) qui porte la lèvre supérieure (33b),
**caractérisé en ce que** chacune des lèvres inférieure et supérieure présentant une forme en oreilles de lapin, avec l'une parmi la lèvre inférieure et la lèvre supérieure (33a, 33b) comprenant deux excroissances (37a) indépendantes, et l'autre parmi la lèvre inférieure et la lèvre supérieure (33a, 33b) comprenant deux excroissances (37b) liée entre elles par une bulle (38) flexible et écrasable qui est destinée à se loger entre les deux excroissances (37a) indépendantes.

2. Ensemble selon la revendication 1, dans lequel les lèvres inférieure et supérieure (33a, 33b) comporte chacune une base rigide (36a, 36b) à partir de laquelle dépasse les excroissances (37a, 37b).

3. Ensemble selon la revendication 1 ou 2, dans lequel :
- l'armature inférieure (32a) est portée par des pieds inférieurs (34a) espacés les uns des autres suivant la direction de longueur de fente (D1) et s'appuyant sur le socle inférieur (31a) ;
- l'armature supérieure (32b) est portée par des pieds supérieurs (34b) espacés les uns des autres suivant la direction de longueur de fente (D1) et s'appuyant sur le socle supérieur (31b) ;
- ces pieds inférieurs et supérieurs (34a, 34b) étant prévus pour presser les lèvres inférieure et supérieure (33a, 33b) l'une contre l'autre tout en étant compressibles selon la direction de largueur de fente (D2).

4. Ensemble selon la revendication 3, dans lequel les pieds inférieurs et supérieurs (34a, 34b) sont formés d'une succession de portions élastiques en accordéon (35) dans la direction de largeur de fente (D2).

5. Ensemble selon la revendication 1, dans lequel :
- l'armature inférieure (32a) est formée d'une alternance de cellules rigides inférieures (41a) et de cellules souples inférieures (42a) ;
- l'armature supérieure (32b) est formée d'une alternance de cellules rigides supérieures (41b) et de cellules souples supérieures (42b).

6. Ensemble selon la revendication 3 combinée à la revendication 5, dans lequel :
- les cellules rigides inférieures (41a) sont agencées chacune dans le prolongement d'un pied inférieur (34a) dans la direction de largeur de fente (D2) ;
- les cellules rigides supérieures (41b) sont agencées chacune dans le prolongement d'un pied supérieur (34b) dans la direction de largeur de fente (D2).

7. Ensemble selon l'une des revendications précédentes, dans lequel la direction de la longueur de fente (D1) est circulaire, avec la partie inférieure de joint (30a) présentant une forme convexe vu de la fente (24), et complémentairement la partie supérieure de joint (30b) présentant une forme concave vu de la fente (24), les socles inférieur et supérieur (31a, 31b) s'étendant perpendiculairement à la paroi de fuselage 5a et l'intersectant chacun pour former chacun une ligne correspondante à un offset, suivant la direction de la largeur de fente (D2), de la direction de la longueur de fente (D1).

8. Ensemble selon la revendication 7, dans lequel les excroissances (37a) liées par la bulle (38) sont portées par la lèvre supérieure (33b).

9. Ensemble selon l'une des revendications précédentes, dans lequel le socle inférieur (31a) est prolongé par des parois latérales inférieures (39a) qui entourent au moins en partie la partie inférieure de joint (30a), et/ou le socle supérieur (31b) est prolongé par des parois latérales supérieures (39b) qui entourent au moins en partie la partie supérieure de joint (30b), ces parois latérales inférieures et supérieures (39a, 39b) formant surfaces de butée des parties inférieure et supérieure de joint (30a, 30b) en s'étendant suivant la direction de la largeur de fente (D2).

10. Ensemble selon l'une des revendications précédentes, dans lequel la surface portante (16) est un volet mobile de bord de fuite.

## Patentansprüche

1. Anordnung (20) für Flugzeug, umfassend:
- eine Wand (5a), die ein Inneres von einem Äußeren des Flugzeugs, wie ein Rumpf- oder Tragflächenteil, begrenzt, wobei diese Wand einen Führungsschlitz (24) aufweist, der durchgehend gebildet ist und sich entlang einer Längenrichtung des Schlitzes (D1) von einem vorderen Schlitzende (24a) zu einem hinteren Schlitzende (24b) erstreckt;
- eine Betätigungswelle (22), die eine tragende Fläche (16) trägt, wobei diese Welle (22) den Schlitz durchquert, indem sie entlang der Längenrichtung des Schlitzes (D1) zwischen dem vorderen und dem hinteren Schlitzende (24a 24b) beweglich ist;
- einen unteren Sockel (31a) und einen oberen Sockel (31b), die mit der Wand (5a) fest verbunden sind und auf beiden Seiten des Schlitzes entlang einer Breitenrichtung des Schlitzes (D2), die eine Senkrechte zu der Längenrichtung des Schlitzes (D1) ist, angeordnet sind;
- ein Dichtungselement (30), um den Schlitz (24) zu versiegeln, mit einem unteren Dichtungsteil (30a) und einem oberen Dichtungsteil (30b), die gegenüberliegend und beiderseits des Schlitzes (24) angeordnet sind, indem sie von dem unteren Sockel (31a) bzw. dem oberen Sockel (31b) getragen werden, wobei dieser untere und obere Dichtungsteil (30a, 30b) eine untere Lippe (33a) bzw. eine obere Lippe (33b) aufweisen, die flexibel und in der Breitenrichtung (D2) quetschbar sind, wobei diese untere und obere Lippe Kontaktbahnen bilden, zwischen denen die Betätigungswelle (22) geklemmt ist und sich bewegt, indem sie sie während die tragende Fläche (16) in Bewegung versetzt wird, verformt, wobei der untere Dichtungsteil (30a) eine untere Armierung (32a) aufweist, welche die untere Lippe (33a) trägt, und wobei der obere Dichtungsteil (30b) eine obere Armierung (32b) aufweist, welche die obere Lippe (33b) trägt,
**dadurch gekennzeichnet, dass** jede der unteren und oberen Lippe eine Hasenohrform aufweist, wobei eine von der unteren und oberen Lippe (33a, 33b) zwei unabhängige Auswüchse (37a) umfasst, und wobei die andere von der unteren und oberen Lippe (33a, 33b) zwei Auswüchse (37b) umfasst, die durch eine flexible und quetschbare Blase (38) miteinander verbunden sind, die dazu bestimmt ist, zwischen den zwei unabhängigen Auswüchsen (37a) aufgenommen zu werden.

2. Anordnung nach Anspruch 1, wobei die untere und obere Lippe (33a, 33b) jede eine starre Basis (36a, 36b) aufweist, von der aus die Auswüchse (37a, 37b) überstehen.

3. Anordnung nach Anspruch 1 oder 2, wobei:
- die untere Armierung (32a) von unteren Füßen (34a) getragen wird, die entlang der Längenrichtung des Schlitzes (D1) voneinander beabstandet sind und sich auf dem unteren Sockel (31a) abstützen;
- die obere Armierung (32b) von oberen Füßen (34b) getragen wird, die entlang der Längenrichtung des Schlitzes (D1) voneinander beabstandet sind und sich auf dem oberen Sockel (31b) abstützen;
- diese unteren und oberen Füße (34a, 34b) angeordnet sind, um die untere und obere Lippe (33a, 33b) gegeneinander zu pressen, und gleichzeitig gemäß der Breitenrichtung (D2) zusammendrückbar sind.

4. Anordnung nach Anspruch 3, wobei die unteren und oberen Füße (34a, 34b) von einer Abfolge von ziehharmonikaartigen elastischen Teilen (35) in der Breitenrichtung des Schlitzes (D2) gebildet sind.

5. Anordnung nach Anspruch 1, wobei:
- die untere Armierung (32a) abwechselnd von unteren starren Zellen (41a) und von unteren biegsamen Zellen (42a) gebildet ist;
- die obere Armierung (32b) abwechselnd von oberen starren Zellen (41b) und von oberen biegsamen Zellen (42b) gebildet ist.

6. Anordnung nach Anspruch 3 in Kombination mit Anspruch 5, wobei:
- die unteren starren Zellen (41a) jede in der Verlängerung eines unteren Fußes (34a) in der Breitenrichtung des Schlitzes (D2) angeordnet sind;
- die oberen starren Zellen (41b) jede in der Verlängerung eines oberen Fußes (34b) in der Breitenrichtung des Schlitzes (D2) angeordnet sind.

7. Anordnung nach einem der vorhergehenden Ansprüche, wobei die Längenrichtung des Schlitzes (D1) kreisförmig ist, wobei der untere Dichtungsteil (30a) eine vom Schlitz (24) aus gesehen konvexe Form aufweist, und wobei auf komplementäre Weise der obere Dichtungsteil (30b) eine vom Schlitz (24) aus gesehen konkave Form aufweist, wobei der untere und obere Sockel (31a, 31b) sich senkrecht zu der Rumpfwand (5a) erstrecken und sie jeder schneiden, um jeder eine einem Versatz, entlang der Breitenrichtung des Schlitzes (D2), der Längenrichtung des Schlitzes (D1), entsprechende Linie zu bilden.

8. Anordnung nach Anspruch 7, wobei die Auswüchse (37a), die mit der Blase (38) verbunden sind, von der oberen Lippe (33b) getragen werden.

9. Anordnung nach einem der vorhergehenden Ansprüche, wobei der untere Sockel (31a) sich über untere Seitenwände (39a) fortsetzt, die wenigstens zum Teil den unteren Dichtungsteil (30a) umgeben, und/oder der obere Sockel (31b) sich über obere Seitenwände (39b) fortsetzt, die wenigstens zum Teil den oberen Dichtungsteil (30b) umgeben, wobei diese unteren und oberen Seitenwände (39a, 39b) Anschlagflächen für den unteren und oberen Dichtungsteil (30a, 30b) bilden, indem sie sich entlang der Breitenrichtung des Schlitzes (D2) erstrecken.

10. Anordnung nach einem der vorhergehenden Ansprüche, wobei die tragende Fläche (16) eine bewegliche Hinterkantenklappe ist.

## Claims

1. Assembly (20) for aircraft comprising:
- a wall (5a) delimiting an interior from an exterior of the aircraft, such as a part of the fuselage or wing, this wall being provided with a through formed routing slot (24) extending along a slot length direction (D1) from a forward end (24a) of the slot to an aft end (24b) of the slot;
- a drive shaft (22) that supports a lifting surface (16), this shaft (22) passing through the slot and being movable along the slot length direction (D1) between the forward and aft ends (24a, 24b) of the slot;
- a lower mounting (31a) and an upper mounting (31b) fixed to the wall (5a) and arranged on each side of the slot along a slot width direction (D2) that is normal to the slot length direction (D1);
- a seal (30) to seal the slot (24), comprising a seal lower part (30a) and a seal upper part (30b) arranged facing each other on each side of the slot (24) and respectively supported by the lower mounting (31a) and the upper mounting (31b) respectively, these seal lower and upper parts (30a, 30b) comprising respectively a lower lip (33a) and upper lip (33b) which are flexible and compressible in the width direction (D2), these lower and upper lips forming contact tracks between which the drive shaft (22) is surrounded, the drive shaft (22) deforming theses lips when it is moved with the lifting surface (16) is moved, the seal lower part (30a) comprising a lower stiffener (32a) that supports the lower lip (33a) and the seal upper part (30b) comprising an upper stiffener (32b) that supports the upper lip (33b),
**characterised in that** each of the lower and upper lips have a rabbit ears type structure, with either the lower lip or the upper lip (33a, 33b) comprising two independent protrusions (37a), and the other among the lower lip and the upper lip (33a, 33b) comprising two protrusions (37b) connected to each other by a flexible and compressible balloon (38) that is to be positioned between the two independent protrusions (37a).

2. Assembly according to claim 1, wherein each of the lower and upper lips (33a, 33b) comprises a rigid base (36a, 36b) from which the protrusions (37a, 37b) project.

3. Assembly according to claim 1 or 2, wherein:
- the lower stiffener (32a) is supported by lower stands (34a) at a spacing from each other along the slot length direction (D1) and bearing on the lower mounting (31a);
- the upper stiffener (32b) is supported by upper stands (34b) at a spacing from each other along the slot length direction (D1) and bearing on the upper mounting (31b);
- these lower and upper stands (34a, 34b) being designed to press the lower and upper lips (33a, 33b) into contact with each other, while remaining compressible along the slot width direction (D2).

4. Assembly according to claim 3, wherein the lower and upper stands (34a, 34b) are formed from a succession of accordion shaped elastic portions (35) along the slot width direction (D2).

5. Assembly according to claim 1, wherein:
- the lower stiffener (32a) is formed from an alternation of lower rigid cells (41a) and lower flexible cells (42a);
- the upper stiffener (32b) is formed from an alternation of upper rigid cells (41b) and upper flexible cells (42b).

6. Assembly according to claim 3 combined with claim 5, wherein:
- each of the lower rigid cells (41a) extends from a lower stand (34a) along the slot width direction (D2);
- each of the upper rigid cells (41b) extends from an upper stand (34b) along the slot width direction.

7. Assembly according to one of the preceding claims, wherein the slot length direction (D1) is circular, in which the seal lower part (30a) has a convex shape as viewed from the slot (24), and in a complementary manner the seal upper part (30b) has a concave shape as viewed from the slot (24), the lower and upper mountings (31a, 31b) extending perpendicular to the fuselage wall (5a) and each intersecting it so that each forms a line corresponding to an offset of the slot length direction (D1) along slot the width direction (D2).

8. Assembly according to claim 7, wherein the protrusions (37a) connected by the balloon (38) are supported by the upper lip (33b).

9. Assembly according to one of the previous claims, wherein the lower mounting (31a) is prolonged by lower side walls (39a) that surround at least partly the seal lower part (30a), and/or the upper mounting (31b) is prolonged by upper side walls (39b) that surround at least partly the seal upper part (30b), these lower and upper side walls (39a, 39b) forming stop surfaces for the seal lower and upper parts (30a, 30b) by extending along the slot width direction (D2).

10. Assembly according to one of the previous claims, wherein the lifting surface (16) is a moveable trailing edge flap.
